## Europäisches Patentamt
## European Patent Office
## Office européen des brevets

(11) Veröffentlichungsnummer: **0 424 319 A1**

# EUROPÄISCHE PATENTANMELDUNG

(21) Anmeldenummer: **90810782.4**

(22) Anmeldetag: **11.10.90**

(51) Int. Cl.5: **F16L 33/24, F16L 33/28**

(30) Priorität: **16.10.89 CH 3768/89**

(43) Veröffentlichungstag der Anmeldung:
**24.04.91 Patentblatt 91/17**

(84) Benannte Vertragsstaaten:
**AT BE CH DE DK ES FR GB GR IT LI LU NL SE**

(71) Anmelder: **WBT WIRTSCHAFTSBERATUNGS TRUST REG**
**Schaanerstrasse 79**
**FL-9487 Bendern(LI)**

(72) Erfinder: **Kersting, Wolfgang**
**Essanestr. 257**
**FL-9492 Eschen(LI)**

(74) Vertreter: **Münch, Otto et al**
**Patentanwalts-Bureau Isler AG Postfach 6940**
**CH-8023 Zürich(CH)**

(54) **Schlauchkupplungsmanschette.**

(57) Die Manschette (1) besteht aus einem Manschettenkörper (2) aus Kunststoff und einem Federstahlring (3). Der Körper (2) wird auf ein Schlauchende aufgeschraubt. Der Ring (3) bildet eine Schulter zum Eingriff eines Nockens eines Kupplungsschlosses. Durch diese Ausbildung ist die Manschette preiswert herstellbar und widerstandsfähig gegen Beschädigungen.

Fig. 1

EP 0 424 319 A1

# SCHLAUCHKUPPLUNGSMANSCHETTE

Eine Schlauchkupplungsmanschette gemäss Oberbegriff des Anspruchs 1 ist aus der EP-A-0 298 023 bekannt. Diese Manschette besteht aus Temperguss und hat sich sehr bewährt. Allerdings ist ihre Herstellung teuer.

Der vorliegenden Erfindung liegt die Aufgabe zugrunde, eine derartige Manschette so auszubilden, dass sie preiswert herstellbar ist. Diese Aufgabe wird durch die kennzeichnenden Merkmale des Anspruchs 1 gelöst.

Nachfolgend wird ein Ausführungsbeispiel der Erfindung anhand der Zeichnung erläutert. Darin zeigt:

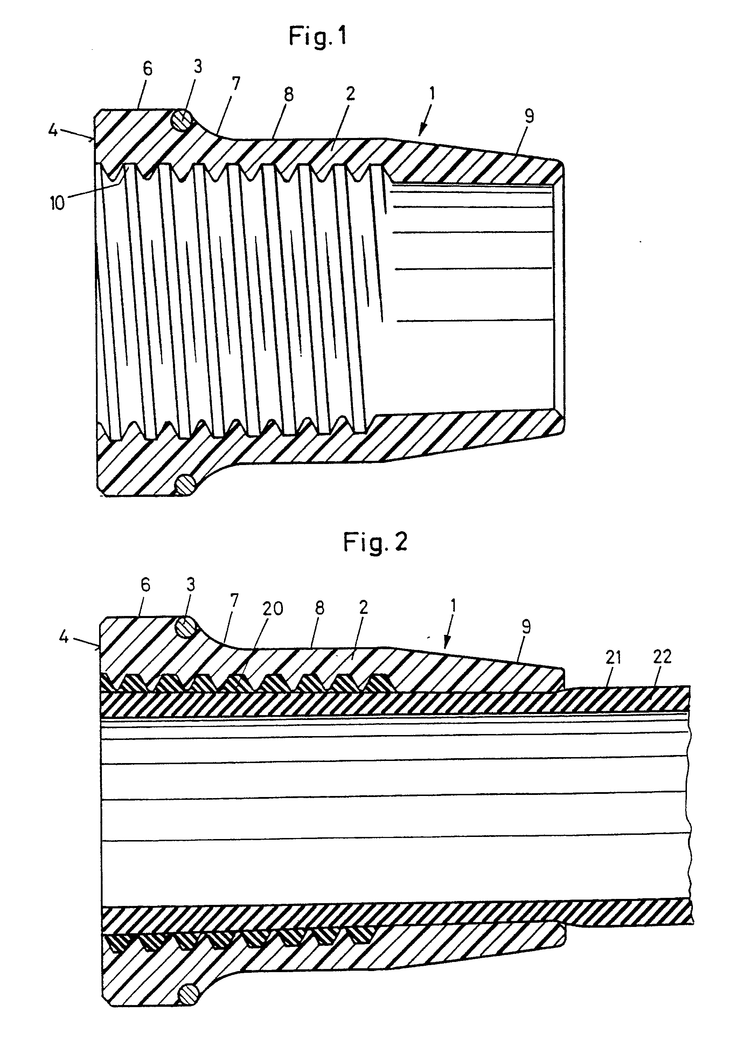

Fig. 1 einen Axialschnitt durch eine erfindungsgemässe Manschette, und

Fig. 2 die auf ein Schlauchende montierte Manschette.

Die Manschette 1 ist zur Verwendung in einer Kupplung gemäss EP-A-0 298 023 ausgebildet. Sie besteht aus einem hülsenförmigen Manschettenkörper 2 aus Kunststoff, beispielsweise aus einem relativ steifen Elastomer, und einem geschlitzten oder geschlossenen Federstahlring 3 mit kreisförmigem Querschnitt. Der Manschettenkörper 2 hat eine ebene Stirnfläche 4. Der Federstahlring 3 ist von der Stirnfläche 4 beabstandet und hat einen Aussendurchmesser gleich der sich von der Stirnfläche 4 erstreckenden zylindrischen Aussenfläche 6 des Manschettenkörpers 2. Anschliessend an den Ring 3 hat der Manschettenkörper 2 eine torusförmige Verjüngung 7, an welche ein zylindrischer Abschnitt 8 und daran ein konisch verjüngter Abschnitt 9 anschliesst. Der Ring 3 wird zweckmässig beim Spritzgiessen des Manschettenkörpers 2 miteingegossen. Der Ring 3 bildet eine abriebfeste, widerstandsfähige Schulter zum Eingriff eines Nockens eines Kupplungsschlosses. Der Manschettenkörper 2 hat von der Stirnfläche 4 ausgehend ein Innengewinde 10 zum Aufschrauben auf ein Aussengewinde 20. Das Aussengewinde 20 ist als elastomeres Kunststoffteil auf den Aussenmantel 21 eines Endes eines flexiblen Schlauches 22 aufgeklebt oder aufvulkanisiert, wie dies in der EP-A-0 298 023 beschrieben ist.

Zur Montage wird zunächst die Manschette 1 über das Schlauchende geschoben, anschliessend das Aussengewinde 20 auf das Schlauchende aufgebracht und mit einem Gleitkleber, z.B. einer Gummilösung beschichtet und schliesslich die Manschette 1 auf das Aussengewinde 20 aufgeschraubt, so dass die Stirnfläche 4 bündig mit der Stirnfläche des Schlauchendes ist. Die Schlauchkupplung mit der erfindungsgemässen Manschette eignet sich vor allem für Betonförderschläuche und dgl., wo eine Kupplung ohne Querschnittsreduktion des Schlauches erforderlich ist.

Die beschriebene Ausbildung der Manschette ist nicht nur preiswert herstellbar, sondern sie ist gegenüber der bekannten Manschette gemäss EP-A-0 298 023 weniger verletzlich, so dass sie im rauhen Betrieb auf der Baustelle länger haltbar ist. Ausserdem erübrigt sich unter Umständen ein separater Dichtring zwischen stirnseitig aneinander anschliessenden Manschetten.

## Ansprüche

1. Schlauchkupplungsmanschette zur permanenten Befestigung auf dem Aussenmantel (21) eines Schlauchendes, wobei die Manschette (1) eine ebene Stirnfläche (4) und eine von der Stirnfläche (4) beabstandete Schulter zum Eingriff eines Nokkens eines Kupplungsschlosses aufweist, dadurch gekennzeichnet, dass der Manschettenkörper (2) aus Kunststoff besteht und dass die Schulter durch einen im Manschettenkörper (2) eingesetzten Metallring (3) gebildet ist.

2. Manschette nach Anspruch 1, dadurch gekennzeichnet, dass der Manschettenkörper (2) aus einem Elastomer besteht.

3. Manschette nach Anspruch 1 oder 2, dadurch gekennzeichnet, dass der Metallring (3) aus Federstahlt besteht.

4. Manschette nach einem der Ansprüche 1 bis 3, dadurch gekennzeichnet, dass der Metallring (3) geschlitzt ist.

5. Manschette nach einem der Ansprüche 1 bis 4, dadurch gekennzeichnet, dass der Metallring (3) einen kreisförmi gen Querschnitt hat.

6. Manschette nach einem der Ansprüche 1 bis 5, dadurch gekennzeichnet, dass der Metallring (3) in den Manschettenkörper (2) eingegossen ist.

7. Manschette nach einem der Ansprüche 1 bis 6, dadurch gekennzeichnet, dass der Manschettenkörper (2) ein Innengewinde (10) zum Aufschrauben auf ein auf das Schlauchende aufgeklebtes oder aufvulkanisiertes Aussengewinde (20) hat.

## Fig. 1

## Fig. 2

| | Europäisches Patentamt | EUROPÄISCHER RECHERCHENBERICHT | Nummer der Anmeldung EP 90 81 0782 |
| --- | --- | --- | --- |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| --- | --- | --- | --- |
| Y | DE-A-3 445 332  (MÜNDENER GUMMIWERKE GmbH) <br> * Zusammenfassung; Figur * <br> — — — | 1-3 | F 16 L 33/24 <br> F 16 L 33/28 |
| A | | 7 | |
| Y | GB-A-8 668 52  (AMALGAMATED LIMESTONE CO., LTD) <br> * Seite 1, Zeilen 57-67; Figuren 1,2 * <br> — — — | 1-3 | |
| A | | 6 | |
| D,A | EP-A-0 298 023  (ECONT CO., LTD) <br> * Ansprüche; Figur * <br> — — — — — | 1,7 | |
| | | | RECHERCHIERTE SACHGEBIETE (Int. Cl.5) |
| | | | F 16 L |

Der vorliegende Recherchenbericht wurde für alle Patentansprüche erstellt

| Recherchenort | Abschlußdatum der Recherche | Prüfer |
| --- | --- | --- |
| Den Haag | 02 Januar 91 | NEUMANN E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................................
& : Mitglied der gleichen Patentfamilie, übereinstimmendes Dokument